# EUROPÄISCHE PATENTSCHRIFT

(11) **EP 4 130 517 B1**
(45) Veröffentlichungstag und Bekanntmachung des Hinweises auf die Patenterteilung: **17.06.2026**
(21) Anmeldenummer: 22185670.1
(22) Anmeldetag: 19.07.2022
(51) Int. Cl.: F16H 61/00, F04B 23/04

(54) **HYDRAULISCHE ANORDNUNG UND LANDWIRTSCHAFTLICHES ODER INDUSTRIELLES NUTZFAHRZEUG**
HYDRAULIC ASSEMBLY AND AGRICULTURAL OR INDUSTRIAL UTILITY VEHICLE
ENSEMBLE HYDRAULIQUE ET VÉHICULE AGRICOLE OU INDUSTRIEL

(30) Priorität: 04.08.2021 DE 102021120313
(43) Veröffentlichungstag der Anmeldung: 08.02.2023
(73) Patentinhaber: Deere & Company, Moline, IL 61265 (US)
(72) Erfinder: Meid, Michael, Mannheim (DE); Billich, Manuel, Mannheim (DE); Busold, Thomas, Mannheim (DE)
(74) Vertreter: Stein, Stefan

(56) Entgegenhaltungen:
- EP-A2- 1 923 606
- EP-A2- 2 667 039

## Beschreibung

Die Erfindung betrifft eine hydraulische Anordnung gemäss dem Oberbegriff des unabhängigen Anspruchs 1 und ein landwirtschaftliches oder industrielles Nutzfahrzeug gemäss dem Oberbegriff des Anspruchs 7.

Bei landwirtschaftlichen oder industriellen Nutzfahrzeugen, bevorzugt landwirtschaftlichen oder industriellen Zugfahrzeugen, besonders bevorzugt Traktoren oder Schleppern, ist es üblich, dass die an der Maschine bzw. am Nutzfahrzeug vorgesehenen hydraulischen Komponenten durch getrennte Hydraulikkreisläufe bzw. Hydraulikzweige versorgt werden. Beispielsweise kann die hydraulische Anordnung für ein landwirtschaftliches oder industrielles Nutzfahrzeug einen Haupthydraulikzweig, der von einer Haupthydraulikpumpe mit Hydraulikflüssigkeit versorgbar ist, und eine Ladepumpe umfassen, durch welche die Haupthydraulikpumpe mit Hydraulikflüssigkeit versorgbar und/oder speisbar und/oder aufladbar ist. Darüber hinaus kann die hydraulische Anordnung einen Getriebehydraulikzweig und insbesondere auch einen Schmierhydraulikzweig und/oder insbesondere einen Ladehydraulikzweig umfassen. Je nach Konstruktionsart kann der Haupthydraulikzweig in weitere unterschiedliche Zweige unterteilt sein, um Lenkung, Bremse und andere hydraulische Komponenten mit Hydraulikflüssigkeit zu versorgen. Die EP 1 923 606 A2 offenbart eine hydraulische Anordnung, die eine Ladepumpe umfasst, wobei bei der Ladepumpe wenigstens eine Teilmenge der von der Ladepumpe geförderten Hydraulikflüssigkeit zur Versorgung des Schmierhydraulikzweigs abzweigbar ist.

Beim Getriebehydraulikzweig kann es ferner sein, dass dieser den Schalthydraulikzweig und/oder den Getriebeschmierhydraulikzweig umfasst. Der Schalthydraulikzweig kann die Funktion des Getriebes gewährleisten, also beispielsweise die Schaltung von Kupplungen in einem Getriebe und/oder die Funktion der einzelnen Kupplungen. Der Getriebeschmierhydraulikzweig kann die Schmierung und/oder Kühlung der Lager und sonstiger beweglicher Getriebeteile gewährleisten. Zur Versorgung des Getriebehydraulikzweigs kann eine Getriebepumpe verwendet werden, beispielsweise eine kostengünstige, einfache Konstantpumpe oder eine variable oder verstellbare Pumpe. In der Regel kann die Versorgung des Getriebeschmierhydraulikzweiges dann über die Getriebepumpe erfolgen. Die Ladepumpe kann, insbesondere über den Ladehydraulikzweig, der Versorgung des Haupthydraulikzweigs mit Hydraulikflüssigkeit dienen. Der Ladehydraulikzweig kann beispielsweise in einem Druckbereich von 1 bar bis 2 bar arbeiten. Der Schalthydraulikkreis kann beispielsweise zwischen 15 bar und 25 bar arbeiten, insbesondere aufgrund der Abhängigkeit von der erforderlichen Drehmomentkapazität. Der Getriebeschmierhydraulikzweig kann beispielsweise im Bereich von 0,5 bar bis 2 bar arbeiten.

Bekannte hydraulische Anordnungen und/oder Nutzfahrzeuge haben den Nachteil, dass die Getriebepumpe überdimensioniert ist, um bei Schaltvorgänge, also dem Schalthydraulikzweig, und gleichzeitiger Getriebeschmierung, also dem Getriebeschmierhydraulikzweig, ausreichend Hydraulikflüssigkeit bereitzustellen. Ein weiterer Nachteil ist die mangelnde Energieeffizienz. Die gesamte Fördermenge der Getriebepumpe muss auf einen Systemdruck komprimiert werden. Dies führt aufgrund der direkten Korrelation von Druck und Durchfluss dazu, dass die Getriebepumpe eine hohe Pumpenleistung aufweisen bzw. erbringen muss. Da aber der Schalthydraulikzweig in Phasen ohne Kupplungs-/Bremsbetätigungen einen geringen Durchfluss und hohen Druck benötigt und der Getriebeschmierhydraulikzweig einen hohen Durchfluss und niedrigen Druck benötigt, weist die hydraulische Anordnung, insbesondere der Getriebehydraulikzweig, somit eine geringe Effizienz bzw. einen schlechten Wirkungsgrad auf. Darüber hinaus besteht aufgrund der Ventilcharakteristik eine Abhängigkeit von Systemdruck und Motordrehzahl im Getriebehydraulikzweig. Der zusätzlich erzeugte Systemdruck wird jedoch nachteilhafterweise nicht benötigt. Ausserdem kann beim Schalten nur eine geringe Durchflussrate für die Kupplungs- und Bremskühlung bereitgestellt werden, da die gesamte Pumpendurchflussrate aufgrund einer Priorisierung für die Kupplungs- und Bremsbefüllung, also für den Schalthydraulikzweig benötigt wird. Dies gilt insbesondere für niedrigere Motordrehzahlen. Ebenso verteilt sich die aufgrund der Überdimensionierung und des zusätzlichen Leistungsaufwand der Getriebepumpe zusätzlich erzeugte Wärmeenergie im Getriebe. Diese Wärmeenergie muss vom Getriebekühler gekühlt und abgeführt werden. Insgesamt entstehen so nachteilhafterweise unnötige Leistungsverluste in der hydraulischen Anordnung und/oder am gesamten Nutzfahrzeug.

Der vorliegenden Erfindung liegt daher die Aufgabe zugrunde, eine hydraulische Anordnung und ein Nutzfahrzeug vorzuschlagen, durch welche die vorgenannten Probleme überwunden werden. Insbesondere sollen eine hydraulische Anordnung und ein Nutzfahrzeug vorgeschlagen werden, mit welchen die oben genannten Leistungsverluste reduziert werden bzw. die hydraulische Anordnung und/oder das Nutzfahrzeug effizienter betrieben und/oder konstruktiv einfacher ausgestaltet und/oder einfacher betrieben werden können.

Diese Aufgabe wird durch eine hydraulische Anordnung mit den Merkmalen des Anspruchs 1 und ein landwirtschaftliches oder industrielles Nutzfahrzeug mit den Merkmalen des Anspruchs 7 gelöst. Die abhängigen Ansprüche beziehen sich auf besonders vorteilhafte Ausführungsformen der Erfindung.

Erfindungsgemäß wird eine hydraulische Anordnung für ein landwirtschaftliches oder industrielles Nutzfahrzeug vorgeschlagen. Die hydraulische Anordnung umfasst einen Haupthydraulikzweig und eine Haupthydraulikpumpe, wobei dem Haupthydraulikzweig mit der Haupthydraulikpumpe Hydraulikflüssigkeit zuführbar ist. Mit anderen Worten, der Haupthydraulikzweig kann insbesondere mit der Haupthydraulikpumpe mit Hydraulikflüssigkeit aufladbar oder versorgbar oder speisbar sein. Die Hydraulikflüssigkeit kann dem Haupthydraulikzweig von der Haupthydraulikpumpe auf einem ersten Druck oder unter einem ersten Druck stehend zuführbar sein. Der erste Druck kann beispielsweise in einem Bereich von 30 bar bis 210 bar liegen. Die hydraulische Anordnung umfasst weiter eine Ladepumpe, wobei der Haupthydraulikpumpe mit der Ladepumpe Hydraulikflüssigkeit zuführbar ist. Mit anderen Worten, die Haupthydraulikpumpe kann insbesondere mit der Ladepumpe mit Hydraulikflüssigkeit aufladbar oder versorgbar oder speisbar sein. Die Hydraulikflüssigkeit kann der Haupthydraulikpumpe mit der Ladepumpe auf einem zweiten Druck oder unter einem zweiten Druck stehend zuführbar sein. Die hydraulische Anordnung umfasst ausserdem einen Schmierhydraulikzweig und einen Getriebeschmierhydraulikzweig, wobei dem Schmierhydraulikzweig wenigstens eine Teilmenge der von der Ladepumpe geförderten Hydraulikflüssigkeit zuführbar ist. Mit anderen Worten, der Schmierhydraulikzweig kann insbesondere mit der Ladepumpe mit Hydraulikflüssigkeit aufladbar oder versorgbar oder speisbar sein. Die Hydraulikflüssigkeit kann dem Schmierhydraulikzweig mit der Ladepumpe auf dem zweiten Druck oder unter dem zweiten Druck stehend zuführbar sein. Der zweite Druck kann beispielsweise in einem Bereich von 1 bis 2 bar liegen. Im Weiteren umfasst die hydraulische Anordnung einen Schalthydraulikzweig zur Schaltung eines Getriebes, insbesondere zur Schaltung von Kupplungen in einem Getriebe, und eine Getriebepumpe, wobei dem Schalthydraulikzweig mit der Getriebepumpe Hydraulikflüssigkeit zuführbar ist. Mit anderen Worten, der Schalthydraulikzweig kann insbesondere mit der Getriebepumpe mit Hydraulikflüssigkeit aufladbar oder versorgbar oder speisbar sein. Die Hydraulikflüssigkeit kann dem Schalthydraulikzweig mit der Getriebepumpe auf einem dritten Druck oder unter einem dritten Druck stehend zuführbar sein. Der dritte Druck kann beispielsweise in einem Bereich von 15 und 25 bar liegen. Dem Getriebeschmierhydraulikzweig ist wenigstens eine Teilmenge der von der Ladepumpe, und insbesondere der Getriebepumpe, geförderten Hydraulikflüssigkeit zuführbar. Mit anderen Worten, der Getriebeschmierhydraulikzweig kann insbesondere mit wenigstens einer Teilmenge der von der Ladepumpe geförderten Hydraulikflüssigkeit versorgbar oder speisbar sein oder es kann eine Teilmenge der Hydraulikflüssigkeit von der Ladepumpe abzweigbar sein. Die Hydraulikflüssigkeit kann dem Getriebeschmierhydraulikzweig mit der Ladepumpe auf dem zweiten Druck oder unter dem zweiten Druck stehend zuführbar sein. Der Getriebeschmierhydraulikzweig selbst kann beispielsweise in einem Druckbereich von 0,5 bis 2 bar arbeiten.

Bei den Haupthydraulikzweigen können zur Vermeidung von Leistungsverlusten die Haupthydraulikpumpen als variable bzw. verstellbare Pumpen mit Load-Sensing-Hydrauliksystem ausgebildet sein. Diese verstellbaren Pumpen oder Verstellpumpen weisen in der Regel jedoch nur eine begrenzte Ansaugfähigkeit auf, weswegen Ladepumpen verwendet werden können, welche der Haupthydraulikpumpe, insbesondere der Verstellpumpe, Hydraulikflüssigkeit zuführen, insbesondere auf dem zweiten Druck oder unter dem zweiten Druck. Die Ladepumpe kann als eine Konstantpumpe oder eine variable oder verstellbare Pumpe ausgebildet sein. Beide Pumpentypen verfügen über gute Ansaugeigenschaften, so dass auch bei Einsatz in kalten Umgebungen ein ausreichender Ansaugdruck gewährleistet ist.

Die Ladepumpe kann somit sowohl die Haupthydraulikpumpe als auch den Schmierhydraulikzweig der hydraulischen Anordnung bzw. des Nutzfahrzeugs mit der jeweils benötigten Menge an Hydraulikflüssigkeit versorgen. Hierzu kann die hydraulische Anordnung einen Ladehydraulikzweig umfassen, wobei dem Ladehydraulikzweig mit der Ladepumpe Hydraulikflüssigkeit zuführbar ist. Der Ladehydraulikzweig kann nur die Leitungen zwischen der Ladepumpe und dem Schmierhydraulikzweig und/oder der Haupthydraulikpumpe und/oder dem Getriebeschmierhydraulikzweig und/oder insbesondere der ersten Ventileinheit umfassen. Die Ladepumpe kann als verstellbare Pumpe so geregelt sein, dass sich im Ladehydraulikzweig immer ein bestimmter Ladedruck, insbesondere der zweite Druck, einstellt, der von der Ladepumpe durch Veränderung des Fördervolumens aufrechterhalten wird. In einer Ausführung der Ladepumpe als Konstantpumpe kann ein Druckregelventil die Funktion der Druckregelung übernehmen.

Die Haupthydraulikpumpe kann an die Ladepumpe, und/oder insbesondere den Ladehydraulikzweig angeschlossen sein. Die hydraulische Anordnung kann derart ausgestaltet sein, dass, sobald die Haupthydraulikpumpe ihre Fördermenge, und damit ihr Schluckvolumen vergrößert, der Druck im Ladehydraulikzweig leicht zusammenbricht und die Ladepumpe in einer Ausführung als verstellbare Pumpe ihr Fördervolumen vergrößert, um den voreingestellten Ladedruck wieder herzustellen. In einer Ausführung der Ladepumpe als Konstantpumpe kann ein Druckregelventil diese Funktion übernehmen.

Die Hydraulikzweige und Pumpen können mit oder über Leitungen oder Verbindungsleitungen verbunden, insbesondere strömungsverbunden sein. Im Speziellen können die Haupthydraulikpumpe und der Haupthydraulikzweig mit oder über Leitungen und/oder Ventile miteinander verbunden, insbesondere strömungsverbunden sein. Ebenso kann die Ladepumpe mit der Haupthydraulikpumpe und/oder dem Schmierhydraulikzweig und/oder dem Getriebeschmierhydraulikzweig mit oder über Leitungen und/oder Ventile miteinander verbunden, insbesondere strömungsverbunden sein. Darüber hinaus können die Getriebepumpe und der Schalthydraulikkreis mit oder über Leitungen und/oder Ventile miteinander verbunden, insbesondere strömungsverbunden sein. Unter strömungsverbunden kann verstanden werden, dass Hydraulikflüssigkeit von einer der Pumpen und/oder einem der Hydraulikzweige in oder zu einer anderen Pumpe und/oder einem anderen Hydraulikzweig der hydraulischen Anordnung strömen kann oder umgekehrt. Die Strömungsverbindung kann über die Leitungen oder Verbindungsleitungen herstellbar sein.

Die Hydraulikkreisläufe bzw. Hydraulikzweige und Pumpen können derart miteinander verbunden sind, dass die Hydraulikflüssigkeit von einem Hydraulikzweig oder einer Pumpe in den anderen Hydraulikzweig strömen kann, insbesondere unter Druck strömen kann. Dazu können die beiden Hydraulikzweige oder eine Pumpe und ein Hydraulikzweig direkt miteinander verbunden sein, beispielsweise mit Leitungen, oder indirekt miteinander verbunden sein, beispielsweise mit Ventilen.

Der Schmierhydraulikzweig kann so angeordnet und mit der Ladepumpe, und/oder insbesondere mit dem Ladehydraulikzweig, verbunden, insbesondere strömungsverbunden sein, dass dem Schmierhydraulikzweig von der Ladepumpe, insbesondere über den Ladehydraulikzweig, Hydraulikflüssigkeit zuführbar ist, insbesondere über ein zweites Druckregelventil zuführbar ist. Mit anderen Worten, in den Schmierhydraulikzweig kann von der Ladepumpe, insbesondere über den Ladehydraulikzweig, Hydraulikflüssigkeit fließen und/oder strömen. Dadurch kann vorteilhafterweise der Schmierhydraulikzweig mit einer über die gesamte Motordrehzahl konstanten Menge an Hydraulikflüssigkeit versorgt werden. Das zweite Druckregelventil kann unter Berücksichtigung der Druckverluste in den Leitungen, beispielsweise Schmierflüssigkeitsleitungen, so eingestellt sein, dass sich dessen Öffnungsdruck je nach erforderlicher Menge an Hydraulikflüssigkeit bzw. Schmierflüssigkeit unterhalb des eingestellten Ladedrucks der Ladepumpe befindet. Somit kann ein konstanter Volumenstrom Hydraulikflüssigkeit zur Schmierung abfließen, da die Ladepumpe in einer Ausführung als verstellbare Pumpe bestrebt ist, die abfließende Menge an Hydraulikflüssigkeit auszugleichen, indem sie den voreingestellten Ladedruck aufrechterhält, und insbesondere da das Druckgefälle zwischen Ladehydraulikzweig und Schmierhydraulikzeig konstant bleibt. In einer Ausführung der Ladepumpe als Konstantpumpe kann ein Druckregelventil diese Funktion übernehmen.

Der Schalthydraulikzweig kann zur Schaltung von Kupplungen in einem Getriebe mit der Getriebepumpe, insbesondere einer Konstantpumpe oder eine variable Pumpe, vorgesehen sein. Der Schalthydraulikzweig kann von der Getriebepumpe mit Hydraulikflüssigkeit versorgt werden. Dadurch kann der Schalthydraulikzweig unabhängig vom Haupthydraulikzweiges betrieben werden.

Mit anderen Worten, wesentlich für die Erfindung ist eine Kopplung des Getriebeschmierhydraulikzweigs mit der Ladepumpe, und/oder insbesondere dem Ladehydraulikzweig. Die Kopplung kann beispielsweise in Kombination mit einer Reduzierung des Fördervolumens der Getriebepumpe und einer Erhöhung des Fördervolumens der Ladepumpe erfolgen. Vorteilhafterweise arbeitet die Ladepumpe, und insbesondere der Ladehydraulikzweiges, bereits mit dem für die Getriebeschmierung erforderlichen Druck, sodass die Getriebepumpe weder zu gross ausgelegt werden muss oder insbesondere kleiner ausgelegt werden kann, noch die Ladepumpe grösser ausgelegt werden muss. Darüber hinaus ist die Durchflussmenge der Ladepumpe aufgrund des Bedarfs des Haupthydraulikzweigs bereits relativ hoch, was bedeutet, dass der prozentuale Anstieg der Pumpengröße für die Ladepumpe viel geringer ist als der prozentuale Rückgang der Fördermenge der Getriebepumpe. Von Vorteil kann die hydraulische Anordnung somit effizienter, insbesondere energieeffizienter, und einfacher betrieben werden, da die Fördermengen der Pumpen an die spezifischen erforderlichen Systemdrücke und Durchflussraten angepasst werden können. Darüber hinaus erhöht sich die Energieeffizienz der der Ladepumpe mit höherer Auslastung, insbesondere bei Ladepumpen mit variablem Fördervolumen. Ebenso können vorteilhafterweise bei niedrigeren Motordrehzahlen höhere Durchflussraten bereitgestellt werden. Der Getriebeschmierhydraulikzweig ist vorteilhafterweise aufgrund der Kopplung mit der Ladepumpe, und/oder insbesondere dem Ladehydraulikzweig, weniger vom Schalthydraulikzweig abhängig. Dadurch wird der Getriebeschmierhydraulikzweig weniger durch die Füllung von Kupplung und Bremsen mit Hydraulikflüssigkeit beeinflusst. Ebenso kann die Kühlung kleiner ausgelegt werden bzw. kann mit einem verringerten Leistungsbedarf gekühlt werden. Von Vorteil ist ebenfalls die höhere Zapfwellen- und/oder Traktionsleistung des hydraulischen Systems bzw. des Nutzfahrzeugs. Somit ergibt sich von Vorteil eine konstruktiv einfachere Ausgestaltung der hydraulischen Anordnung und insbesondere des Nutzfahrzeugs.

Die hydraulische Anordnung umfasst eine erste Ventileinheit, die einen mit der Ladepumpe verbundenen, insbesondere strömungsverbundenen, Einlass und einen mit dem Getriebeschmierhydraulikzweig verbundenen, insbesondere strömungsverbundenen, Auslass aufweist. Die erste Ventileinheit ist zur Steuerung der Verbindung, insbesondere zur Steuerung einer Strömungsverbindung, zwischen der Ladepumpe und dem Getriebeschmierhydraulikzweig betätigbar. Mit anderen Worten, die erste Ventileinheit kann derart ausgestaltet sein, dass die Versorgung des Getriebeschmierhydraulikzweigs mit Hydraulikflüssigkeit durch die Ladepumpe verstellbar und/oder einstellbar ist, insbesondere in Abhängigkeit vom Ladedruck der Ladepumpe, also bevorzugt dem zweiten Druck. Neben den oben genannten Vorteilen der hydraulischen Anordnung, kann mit der ersten Ventileinheit vorteilhafterweise eine bedarfsabhängige Versorgung des Getriebeschmierhydraulikzweigs realisiert werden.

In Ausgestaltung der Erfindung umfasst die erste Ventileinheit ein erstes Druckregelventil. Das erste Druckregelventil kann bevorzugt ein proportionales 2/2-Wegeventil, besonders bevorzugt ein mit Druck betätigbares proportionales 2/2-Wegeventil sein. Das erste Druckregelventil kann insbesondere ein Steuerventil sein. Die erste Ventileinheit umfasst insbesondere ein erstes Pilotventil, bevorzugt ein 3/2-Wegeventil, besonders bevorzugt ein elektrisch betätigbares 3/2-Wegeventil. Das erste Pilotventil kann als ein Ventil zur Regelung des Drucks ausgebildet sein. Die erste Ventileinheit, insbesondere das erste Druckregelventil, kann als elektrisch geregeltes vorgesteuertes erstes Druckregelventil oder mechanisch betätigbares erstes Druckregelventil ausgebildet sein. Die erste Ventileinheit, insbesondere das erste Druckregelventil, kann aber auch als ein direkt elektronisch angesteuertes erstes Druckregelventil ausgebildet sein. Das erste Druckregelventil kann federbelastet sein. Die erste Ventileinheit kann aber auch nur ein Rückschlagventil mit oder ohne Federbelastung umfassen. Ein Auslass des ersten Druckregelventils kann mit dem Getriebeschmierhydraulikzweig in Verbindung stehen, also insbesondere strömungsverbunden sein. Ein Einlass des ersten Druckregelventils kann mit dem Ladehydraulikzweig und/oder der Ladepumpe verbunden, insbesondere strömungsverbunden sein. Ein Auslass des ersten Pilotventils kann, beispielsweise mit einer ersten oder durch eine erste Steuerleitung, mit dem ersten Druckregelventil in Verbindung stehen, also insbesondere strömungsverbunden sein. In der ersten Steuerleitung kann eine Drossel oder ein Drosselventil angeordnet sein. Ein erster Einlass des ersten Pilotventils kann mit dem Ladehydraulikzweig und/oder der Ladepumpe verbunden, insbesondere strömungsverbunden sein. Ein zweiter Einlass des ersten Pilotventils kann mit einem Hydrauliktank verbunden, insbesondere strömungsverbunden sein. Das erste Druckregelventil kann mit dem ersten Pilotventil mit Druck betätigbar sein. Das erste Druckregelventil kann von einer Feder in eine erste Stellung vorbelastet sein, in der der Auslass und der Einlass des ersten Druckregelventils gesperrt sind. Das erste Pilotventil kann von einer Feder in eine erste Stellung vorbelastet sein, in der die Hydraulikflüssigkeit aus der ersten Steuerleitung vom ersten Druckregelventil, über den Auslass des ersten Pilotventils zum zweiten Einlass des ersten Pilotventils in den Hydrauliktank abfliessen kann. Gleichzeitig kann der erste Einlass des ersten Pilotventils gesperrt sein. Das erste Pilotventil kann elektrisch betätigbar sein. Das erste Pilotventil kann derart elektrisch betätigbar sein, dass das erste Pilotventil in eine zweite Stellung bewegbar ist. Das erste Druckregelventil kann mit dem ersten Pilotventil in der zweiten Stellung derart betätigbar sein, dass das erste Druckregelventil mittels unter Druck stehender und vom ersten Pilotventil zum ersten Druckregelventil strömender Hydraulikflüssigkeit eine zweite Stellung bewegbar ist. In der zweiten Stellung des ersten Pilotventils kann der erste Einlass des ersten Pilotventils mit dem Ladehydraulikzweig und/oder die Ladepumpe und der Auslass des ersten Pilotventils mit der ersten Steuerleitung verbunden sein, insbesondere strömungsverbunden sein. Der zweite Einlass des ersten Pilotventils kann in der zweiten Stellung des Pilotventils gesperrt sein. In der zweiten Stellung des ersten Druckregelventils kann der Auslass des ersten Druckregelventils mit dem Getriebeschmierhydraulikzweig in Verbindung stehen. Gleichzeitig kann in der zweiten Stellung des ersten Druckregelventils der Einlass des ersten Druckregelventils mit dem Ladehydraulikzweig und/oder der Ladepumpe verbunden sein. In der zweiten Stellung des ersten Druckregelventils kann Hydraulikflüssigkeit gezielt und bedarfsgerecht vom Ladehydraulikzweig und/oder der Ladepumpe in den Getriebeschmierhydraulikzweig fliessen oder strömen. Dadurch kann vorteilhafterweise der Getriebeschmierhydraulikzweig mit einer über die gesamte Motordrehzahl bedarfsgerechten Menge an Hydraulikflüssigkeit versorgt werden. Von Vorteil kann also mit der ersten Ventileinheit eine bedarfsgerechte Schmierung des Getriebes erfolgen. Darüber hinaus kann durch das erste Druckregelventil eine geringere Durchflussrate erreicht werden, was insbesondere zu einer geringeren Abhängigkeit des Systemdrucks von der Motordrehzahl führt.

In Ausgestaltung der Erfindung ist dem Schalthydraulikzweig wenigstens eine Teilmenge der von der Haupthydraulikpumpe geförderten Hydraulikflüssigkeit zuführbar. Dies führt zu einer zusätzlichen Entlastung der Getriebepumpe.

Die hydraulische Anordnung umfasst eine zweite Ventileinheit. Die zweite Ventileinheit weist einen mit der Getriebepumpe verbundenen, insbesondere strömungsverbundenen, Einlass und einen mit dem Getriebeschmierhydraulikzweig verbundenen, insbesondere strömungsverbundenen, Auslass auf.

Die zweite Ventileinheit ist zur Steuerung der Verbindung, insbesondere zur Steuerung einer Strömungsverbindung, zwischen der Getriebepumpe und dem Getriebeschmierhydraulikzweig betätigbar. Mit anderen Worten, die zweite Ventileinheit kann derart ausgestaltet sein, dass die Versorgung des Getriebeschmierhydraulikzweig mit Hydraulikflüssigkeit der Getriebepumpe verstellbar und/oder einstellbar ist. Eine Teilmenge der von der Getriebepumpe geförderten Hydraulikflüssigkeit kann also für den Getriebeschmierhydraulikzweig abgezweigt werden. Die nicht benötigte Hydraulikflüssigkeit des Schalthydraulikzweigs kann zur Unterstützung des Getriebeschmierhydraulikzweigs herabgedrosselt werden und/oder dem Getriebeschmierhydraulikzweig zugeführt werden. Die zweite Ventileinheit kann beispielsweise ein Druckbegrenzungsventil oder ein einfaches Überdruckventil umfassen. Ein Teil der Hydraulikflüssigkeit kann so von der Getriebepumpe über einen oder mehrere Kühler bzw. Getriebekühler in den Getriebeschmierhydraulikzweig geleitet werden. Der Schalthydraulikzweig kann also unabhängig vom Haupthydraulikzweig betrieben werden. Neben den oben genannten Vorteilen der hydraulischen Anordnung, kann mit der zweiten Ventileinheit vorteilhafterweise eine zusätzliche Versorgung des Getriebeschmierhydraulikzweigs realisiert werden, um Leistungsverluste zu reduzieren.

In Ausgestaltung der Erfindung umfasst der Getriebeschmierhydraulikzweig eine Schmierung eines Getriebes und/oder von Getriebekomponenten mit Hydraulikflüssigkeit. Der Getriebeschmierhydraulikzweig wird vorzugsweise zur Schmierung eines Getriebes und/oder von Getriebekomponenten herangezogen werden bzw. kann dazu vorgesehen sein.

In Ausgestaltung der Erfindung umfasst der Schmierhydraulikzweig eine Schmierung einer Antriebsachse, insbesondere einer hinteren Antriebsachse des Nutzfahrzeugs, und/oder von Fahrzeugachskomponenten, beispielsweise eines Achsgetriebes, und/oder einer Zapfwelle und/oder von Zapfwellenkomponenten und/oder eines Differentials mit Hydraulikflüssigkeit. Der Schmierhydraulikzweig kann also zur Schmierung von anderen niederdruckgeschmierten Komponenten, wie beispielsweise der Antriebsachse des Nutzfahrzeugs und/oder der Fahrzeugachskomponenten und/oder der Zapfwelle und/oder von Zapfwellenkomponenten und/oder des Differentials, mit Hydraulikflüssigkeit herangezogen werden bzw. kann dazu vorgesehen sein.

Der Haupthydraulikzweig umfasst vorzugweise eine Versorgung, insbesondere eine hydraulische Versorgung, von Steuerventilen mit Hydraulikflüssigkeit und/oder einer hydraulischen Anhängevorrichtung, vorzugsweise einer Dreipunktanhängevorrichtung, mit Hydraulikflüssigkeit. Die Steuerventile können zur Versorgung anderer hydraulischer Komponenten am Nutzfahrzeug, beispielsweise Anbaugeräte, Frontlader etc., vorgesehen sein. Die an der Anhängevorrichtung vorgesehenen hydraulischen Komponenten können durch die im Haupthydraulikzweig bereitgestellte Hydraulikflüssigkeit betrieben werden, beispielsweise auch die Hubzylinder an den Lenkern der Anhängevorrichtung. Ebenso kann der Haupthydraulikzweig eine Versorgung, insbesondere eine hydraulische Versorgung, einer Achsfederung für eine Antriebsachse des Nutzfahrzeugs und/oder einer Kabinenfederung für eine Kabine des Nutzfahrzeugs mit Hydraulikflüssigkeit umfassen. Der Haupthydraulikzweig kann aber auch eine Versorgung, insbesondere eine hydraulische Versorgung, einer Bremsanlage für Bremsen am Nutzfahrzeug und/oder einer Lenkanlage für eine Lenkung des Nutzfahrzeugs mit Hydraulikflüssigkeit umfassen. Für den Fall, dass kein separater Lenkhydraulikzweig mit elektrischer Pumpe vorgesehen ist, kann der Haupthydraulikzweig auch zur hydraulischen Versorgung einer Lenkanlage für eine Lenkung des Nutzfahrzeugs vorgesehen sein.

Die Erfindung betrifft weiter ein landwirtschaftliches oder industrielles Nutzfahrzeug, insbesondere ein Traktor oder Schlepper oder eine Baumaschine. Das landwirtschaftliche oder industrielle Nutzfahrzeug umfasst eine hydraulische Anordnung, insbesondere eine hydraulische Anordnung nach einem der Ansprüche 1 bis 8. Das erfindungsgemässe Nutzfahrzeug weist die oben beschriebenen Vorteile der erfindungsgemässen hydraulischen Anordnung auf. Das landwirtschaftliche oder industrielles Nutzfahrzeug kann einen Antriebsmotor und ein Getriebe umfassen. Mit dem Getriebe kann insbesondere ein vom Antriebsmotor erzeugtes Drehmoment auf mindestens eine Antriebsachse, insbesondere eine vordere und/oder hintere Antriebsachse, des Nutzfahrzeugs übertragbar ist.

Eine erfindungsgemäße hydraulische Anordnung hat den Vorteil, dass durch die Kombination verschiedener, erforderlicher Hydraulikzweige mit einem niedrigen Druck vorteilhafterweise erhebliche Leistungseinsparungen für das Nutzfahrzeug erzielt werden können, da sich die Versorgung der unterschiedlichen hydraulischen Komponenten bzw. Verbraucher durch Haupthydraulikzweig, Ladehydraulikzweig und Schmierhydraulikzweig relativ drehzahlunabhängig und bedarfsgesteuert realisieren lässt. Ferner stellt sich ein Vorteil bezüglich Kosten und Entwicklungsaufwand ein, da bezüglich des Getriebeschmierhydraulikzweigs alle Leitungen und Ventile auf einen niedrigeren, konstant gehaltenen Schmierflüssigkeitsstrom ausgelegt werden können.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines ersten Ausführungsbeispiels eines erfindungsgemässen landwirtschaftlichen oder industriellen Nutzfahrzeugs mit einer erfindungsgemässen hydraulischen Anordnung, und
- Fig. 2: ein schematisches Blockschaltbild eines ersten Ausführungsbeispiels einer erfindungsgemäßen hydraulischen Anordnung, und
- Fig. 3: ein schematisches Blockschaltbild eines zweiten Ausführungsbeispiels einer erfindungsgemäßen hydraulischen Anordnung, und
- Fig. 4a bis 4e: schematische Darstellungen verschiedener Ausführungsformen der ersten Ventileinheiten der erfindungsgemäßen hydraulischen Anordnung.

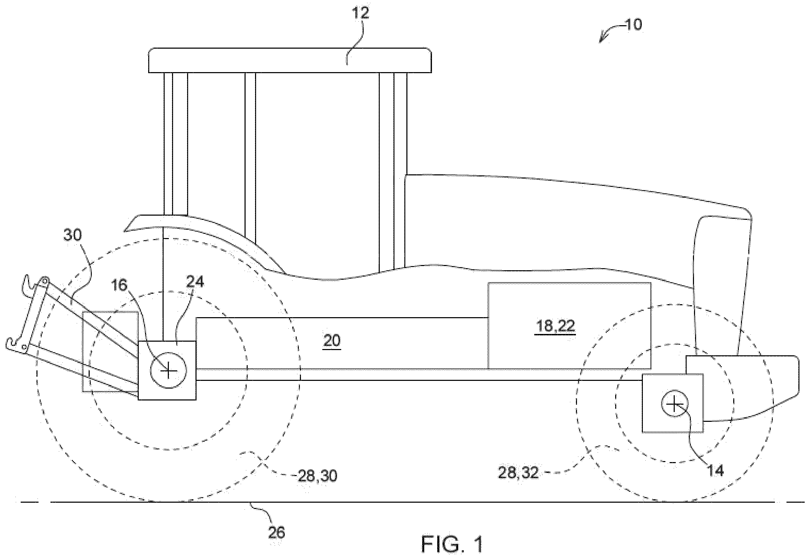

Figur 1 zeigt eine schematische Darstellung eines ersten Ausführungsbeispiels eines erfindungsgemässen landwirtschaftlichen oder industriellen Nutzfahrzeugs 10, insbesondere eines Traktors oder Schleppers, mit einer erfindungsgemässen hydraulischen Anordnung 20. Das Nutzfahrzeug 10 umfasst eine Kabine 12, eine vordere Antriebsachse 14 und eine hintere Antriebsachse 16 sowie ein Differenzial 24. Die hintere Antriebsachse 16 kann permanent und die vordere Antriebsachse 14 kann bedarfsweise zuschaltbar sein oder permanent angetrieben werden. Das Nutzfahrzeug 10 umfasst ferner einen Antriebsmotor 18, der als Verbrennungskraftmaschine oder Elektromotor ausgeführt sein kann. Die hydraulische Anordnung 20 weist einen Aufbau aus verschiedenen einzelnen Hydraulikzweigen auf.

Mit dem Getriebe 22 kann ein Kraft- und Drehmoment des Antriebsmotors 18 mit unterschiedlichen Gangstufen auf die vordere und/oder hintere Antriebsachse 14, 16 übertragbar sein. Die vordere und/oder hintere Antriebsachse 14, 16 wandeln eine Drehzahl bzw. ein Drehmoment des Antriebsmotors in eine Drehung eines oder mehrerer Bodeneingriffsmittel 28 und somit in einen Vorschub des Nutzfahrzeugs um. Das Zugfahrzeug 10 kann eines oder mehrere Bodeneingriffsmittel 28, hier in Form von Rädern 30, 32 dargestellt, aufweisen, welche mit einem Untergrund 26 zur Übertragung von Antriebskräften in Eingriff stehen und/oder durch die sich das Nutzfahrzeug 10 auf dem Untergrund abstützt. Das Nutzfahrzeug 10 kann ausserdem ein Fahrgestell (nicht dargestellt) aufweisen, wobei das Fahrgestell insbesondere von den an der vorderen und hinteren Antriebsachse 14, 16 aufgehängten Rädern 30, 32 getragen werden kann.

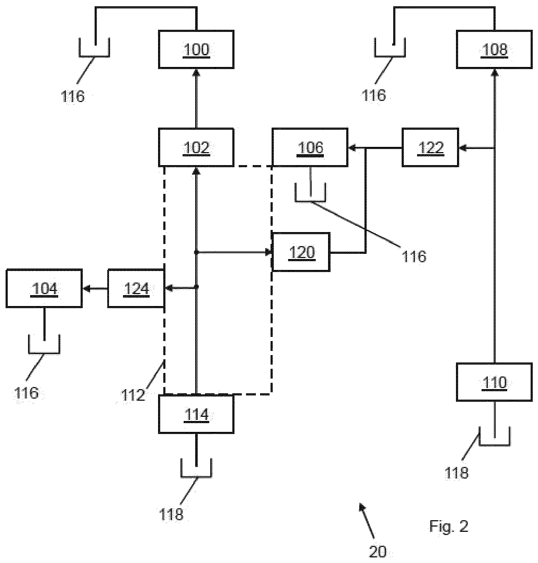

Figur 2 zeigt ein schematisches Blockschaltbild eines ersten Ausführungsbeispiels einer erfindungsgemäßen hydraulischen Anordnung 20. Die in Figur 2 gezeigte hydraulische Anordnung 20 entspricht im Wesentlichen der in Figur 1 gezeigten hydraulischen Anordnung 20, weshalb im Folgenden lediglich auf in Figur 1 nicht gezeigte Details und/oder Unterschiede eingegangen wird. Das Nutzfahrzeug 10 gemäss Figur 1 kann die hydraulische Anordnung 20, wie in Figur 2 dargestellt, umfassen.

Die hydraulische Anordnung 20 umfasst einen Haupthydraulikzweig 100, einen Schmierhydraulikzweig 104, einen Getriebeschmierhydraulikzweig 106 und einen Schalthydraulikzweig 108. Zur Versorgung des Haupthydraulikkreises 100 umfasst die hydraulische Anordnung 20 eine Haupthydraulikpumpe 102, mit der dem Haupthydraulikzweig 100 Hydraulikflüssigkeit zuführbar ist. Die einzelnen Hydraulikzweige 100, 104, 106, 108 sind mit entsprechenden Rücklaufreservoirs oder Hydrauliktanks 116 verbunden, in die überschüssige Hydraulikflüssigkeit funktionsgemäß zurückgeführt bzw. abgelassen wird. Ausserdem umfasst die hydraulische Anordnung 20 eine Ladepumpe 114, und insbesondere einen Ladehydraulikzweig 112, wobei der Haupthydraulikpumpe 102 mit der Ladepumpe 114, und/oder insbesondere dem Ladehydraulikzweig 112, Hydraulikflüssigkeit zuführbar ist. Der Ladehydraulikzweig 112 umfasst im ersten Ausführungsbeispiel die Leitungen von der Ladepumpe 114 zum Haupthydraulikzweig 100 und dem Schmierhydraulikzweig 104 und insbesondere dem Getriebeschmierhydraulikzweig 106. Dem Schmierhydraulikzweig 104 ist dabei wenigstens eine Teilmenge der von der Ladepumpe 114 geförderten Hydraulikflüssigkeit zuführbar. Ausserdem ist dem Getriebeschmierhydraulikzweig 106 wenigstens eine Teilmenge der von der Ladepumpe 114 geförderten Hydraulikflüssigkeit zuführbar. Die Ladepumpe 114 kann somit Hydraulikflüssigkeit zum Aufladen der Haupthydraulikpumpe 102 sowie in den Schmierhydraulikzweig 104 und dem Getriebeschmierhydraulikzweig 106 pumpen. Ferner ist die Ladepumpe 114 mit einem Hydrauliktank 116 verbunden. Zur Versorgung des Schalthydraulikzweiges 108 umfasst die hydraulische Anordnung 20 eine Getriebepumpe 110, wobei dem Schalthydraulikzweig 108 zur Schaltung eines Getriebes Hydraulikflüssigkeit mit der Getriebepumpe 110 zuführbar ist. Ferner ist die Getriebepumpe 110 mit einem Hydrauliktank 116 verbunden.

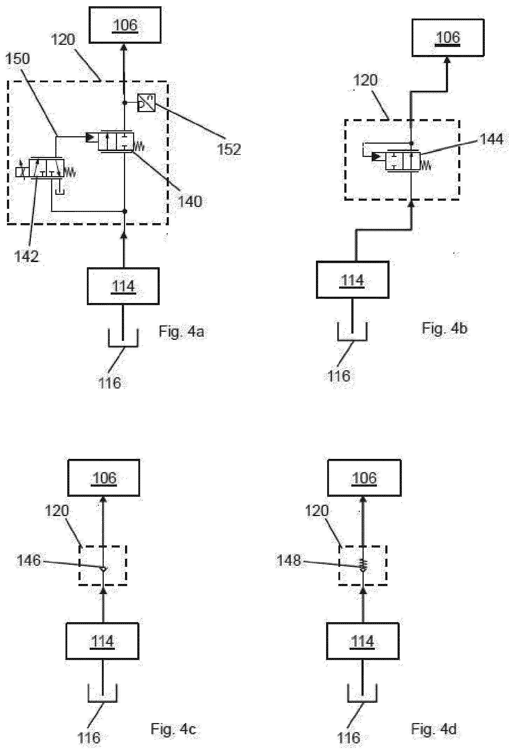

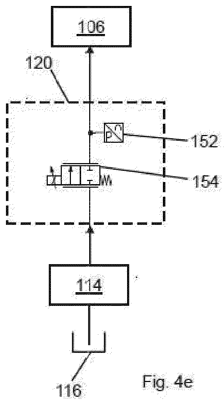

Die hydraulische Anordnung 20 kann im Weiteren, wie gezeigt, eine erste Ventileinheit 120 umfassen, die einen mit der Ladepumpe 114, und/oder insbesondere dem Ladehydraulikzweig 112, verbundenen Einlass und einen mit dem Getriebeschmierhydraulikzweig 106 verbundenen Auslass aufweist. Die erste Ventileinheit 120 ist also zur Steuerung der Verbindung, insbesondere einer Strömungsverbindung, zwischen der Ladepumpe 114, und/oder insbesondere dem Ladehydraulikzweig 112, und dem Getriebeschmierhydraulikzweig 106 betätigbar. Aufgrund der Kopplung der Ladepumpe 114, und/oder insbesondere des Ladehydraulikzweigs 112, mit dem Getriebeschmierhydraulikzweig 106 mit der ersten oder durch die erste Ventileinheit 120, kann dem Getriebeschmierhydraulikzweig 106 von der Ladepumpe 114, und/oder insbesondere vom Ladehydraulikzweig 112, Hydraulikflüssigkeit zugeführt werden, die bereits das vom Getriebeschmierhydraulikzweig 106 benötigte Druckniveau, also einen Ladedruck oder einen zweiten Druck, aufweist. Dadurch kann die hydraulische Anordnung 20 energieeffizienter betrieben und konstruktiv einfach ausgestaltet werden. Im Speziellen kann die Getriebepumpe 110 kleiner ausgelegt und/oder die Ladepumpe 114 effizienter betrieben werden. Die Ladepumpe 114, und/oder insbesondere der Ladehydraulikzweig 112, und der Getriebeschmierhydraulikzweig 106 können direkt, ohne erste Ventileinheit 120 gekoppelt werden. Bevorzugt kann die hydraulische Anordnung 20 aber die erste Ventileinheit 120 umfassen, sodass die Versorgung des Getriebeschmierhydraulikzweigs 106 mit Hydraulikflüssigkeit vorteilhafterweise bedarfsgerecht erfolgen kann. Die erste Ventileinheit 120 kann ein erstes Druckregelventil (siehe Figuren 4a, 4b und 4e, Bezugszeichen 140, 144, 154) umfassen. Die erste Ventileinheit 120 kann insbesondere ein erstes Pilotventil (siehe Figur 4a, Bezugszeichen 142) und/oder einen Drucksensor (siehe Figuren 4a und 4e, Bezugszeichen 152) umfassen. Die erste Ventileinheit 120, insbesondere das erste Druckregelventil, kann bevorzugt als elektrisch geregeltes vorgesteuertes erstes Druckregelventil 140 ausgebildet sein (siehe Figur 4a). Die erste Ventileinheit 120, insbesondere das erste Druckregelventil, kann aber auch als ein direkt elektronisch angesteuertes erstes Druckregelventil ausgebildet sein (siehe Figur 4e, Bezugszeichen 154). Ebenso kann die erste Ventileinheit 120, insbesondere das erste Druckregelventil, aber auch als ein mechanisches erstes Druckregelventil (siehe Figur 4b, Bezugszeichen 144) ausgebildet sein. Die erste Ventileinheit 120 kann aber auch nur ein Rückschlagventil ohne oder mit Federbelastung (siehe Figuren 4c und 4d, Bezugszeichen 146, 148) umfassen. Darüber hinaus kann die hydraulische Anordnung 20 eine zweite Ventileinheit 122 umfassen, die insbesondere als Druckbegrenzungsventil oder ein einfaches Überdruckventil ausgebildet sein kann. Die zweite Ventileinheit 122 kann, wie gezeigt, einen Einlass aufweisen, der, insbesondere über eine Leitung, mit der Getriebepumpe 110 verbunden ist, insbesondere strömungsverbunden ist. Ebenso kann die zweite Ventileinheit 122 einen Auslass aufweisen, der, insbesondere über eine Leitung, mit dem Getriebeschmierhydraulikzweig 106 verbunden ist, insbesondere strömungsverbunden ist, sodass Hydraulikflüssigkeit von der Getriebepumpe 110 zum Getriebeschmierhydraulikzweig 106 strömen kann. Ein Teil der Hydraulikflüssigkeit kann im Anschluss an die Ventileinheit 122 auch von der Getriebepumpe 110 über einen oder mehrere Kühler (nicht gezeigt) in den Getriebeschmierhydraulikzweig 106 geleitet werden.

Der Getriebeschmierhydraulikzweig 106 umfasst eine Schmierung eines Getriebes und/oder von Getriebekomponenten mit Hydraulikflüssigkeit. Der Haupthydraulikzweig 100 umfasst mehrere hydraulische Komponenten, die mit Hochdruckhydraulik versorgt werden. Das können beispielsweise Steuerventile (nicht gezeigt) zum Ansteuern oder Betreiben von hydraulischen Anbaugeräten sein, wie z.B. Frontlader oder hydraulisch betätigbare Anhängegeräte oder Bodenbearbeitungsgeräte. Ferner kann dazu eine hydraulisch betätigte Anhängevorrichtung (siehe Figur 1, Bezugszeichen 30) gehören, die beispielsweise als Dreipunkt-Anhängevorrichtung 30 ausgebildet sein und über mehrere hydraulische Aktuatoren, insbesondere Hydraulikzylinder, an verschiedenen Lenkern verfügen kann. Des Weiteren kann der Haupthydraulikzweig 100 hydraulische Komponenten mit Hydraulikflüssigkeit versorgen, die Teil einer hydraulischen Achsfederung einer vorderen und/oder hinteren Antriebsachse des Nutzfahrzeugs 10 oder einer hydraulischen Kabinenfederung einer Kabine 12 sind. Ferner kann der Haupthydraulikzweig 100 zur Versorgung von hydraulischen Bremsanlagenkomponenten oder von hydraulischen Komponenten dienen, die Teil der Lenkanlage zur Lenkung des Nutzfahrzeugs sind.

Der Schmierhydraulikzweig 104 ist einer Niederdruckhydraulik zuzuordnen und kann für eine Schmiermittelversorgung, also einer Versorgung der Antriebsachse 14, 16 des Nutzfahrzeugs 10, und/oder von Fahrzeugachskomponenten und/oder einer Zapfwelle und/oder von Zapfwellenkomponenten und/oder eines Differentials mit Hydraulikflüssigkeit und/oder weiterer Schmierstellen im Getriebe dienen. Die hydraulische Anordnung 20 kann ein zweites Druckregelventil 124 umfassen. Der Schmierhydraulikzweig 104 kann so angeordnet und mit der Ladepumpe 114 und/oder dem Ladehydraulikzweig 112 verbunden, insbesondere strömungsverbunden sein, dass von der Ladepumpe 114, insbesondere über den Ladehydraulikzweig, zum zweiten Druckregelventil 124 Hydraulikflüssigkeit und dann zum Schmierhydraulikzweig 104 abfließen oder strömen kann. Das zweite Druckregelventil 124 kann einen, insbesondere über eine Leitung, mit der Ladepumpe 114, und/oder insbesondere dem Ladehydraulikzweig 112, verbundenen Einlass und einen, insbesondere über eine Leitung, mit dem Schmierhydraulikzweig 104 verbundenen Auslass aufweisen. Die zweite Druckregelventil 124 kann also zur Steuerung der Verbindung, insbesondere einer Strömungsverbindung, zwischen der Ladepumpe 114, und/oder insbesondere dem Ladehydraulikzweig 112, und dem Schmierhydraulikzweig 104 betätigbar sein.

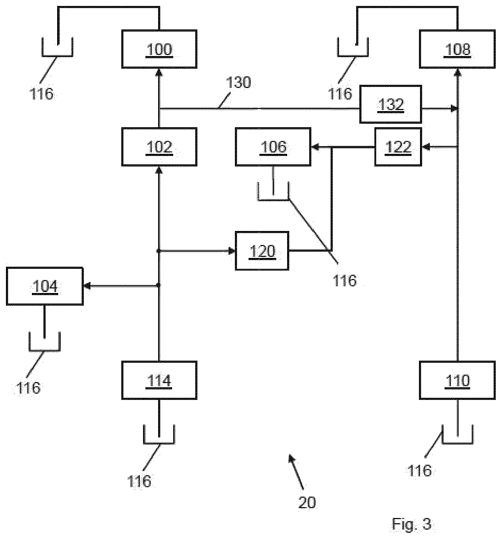

Figur 3 zeigt ein schematisches Blockschaltbild eines zweiten Ausführungsbeispiels einer erfindungsgemäßen hydraulischen Anordnung 20. Die in Figur 3 gezeigte hydraulische Anordnung 20 entspricht im Wesentlichen der in den Figuren 1 und 2 gezeigten hydraulischen Anordnung 20, weshalb im Folgenden lediglich auf die in den Figuren 1 und 2 nicht gezeigte Details und/oder Unterschiede eingegangen wird. Das Nutzfahrzeug 10 gemäss Figur 1 kann die hydraulische Anordnung 20, wie in Figur 3 dargestellt, umfassen.

Die hydraulische Anordnung 20 umfasst hier einen Bypass 130 oder Abzweig. Dadurch kann dem Schalthydraulikzweig 108 wenigstens eine Teilmenge der von der Haupthydraulikpumpe 102 geförderten Hydraulikflüssigkeit zuführbar sein. Darüber hinaus kann die hydraulische Anordnung 20 eine dritte Ventileinheit 132 umfassen, deren Einlass, insbesondere über eine Leitung, mit der Haupthydraulikpumpe 102 und deren Auslass, insbesondere über eine Leitung, mit dem Schalthydraulikzweig 108 verbunden ist, insbesondere strömungsverbunden ist. Die dritte Ventileinheit 132 kann ein drittes Druckregelventil umfassen, das dem ersten Druckregelventil (siehe Figuren 4a, 4b und 4e, Bezugszeichen 140, 144, 154) gleicht. Die dritte Ventileinheit 132 kann insbesondere ein drittes Pilotventil und/oder einen weiteren Drucksensor umfassen, deren Aufbau dem ersten Pilotventil (siehe Figur 4a, Bezugszeichen 142) und/oder dem Drucksensor (siehe Figur 4a, Bezugszeichen 152) gleicht. Die dritte Ventileinheit 132, insbesondere das dritte Druckregelventil, kann als elektrisch geregeltes vorgesteuertes drittes Druckregelventil ausgebildet sein. Die dritte Ventileinheit 132 kann aber auch ein direkt elektronisch angesteuertes drittes Druckregelventil sein, dessen Aufbau dem direkt elektronisch angesteuerten ersten Druckregelventil (siehe Figur 4e, Bezugszeichen 154) gleicht, oder ein mechanisches drittes Druckregelventil sein, dessen Aufbau dem mechanischen ersten Druckregelventil (siehe Figur 4b, Bezugszeichen 144) gleicht. Dadurch kann der Getriebepumpe 110 Hydraulikflüssigkeit zugeführt werden, wodurch die Getriebepumpe 110 kleiner dimensioniert werden kann und vorteilhafterweise Leistungsverluste reduziert werden können.

Die Figuren 4a bis 4e zeigen verschiedene Ausführungsformen der ersten Ventileinheiten 120 der in den Figuren 1 bis 3 gezeigten erfindungsgemäßen hydraulischen Anordnung 20 und des erfindungsgemässen Nutzfahrzeugs 10. Die hydraulische Anordnung 20 und das Nutzfahrzeug gemäss den Figuren 1 bis 3 können die in den Figuren 4a bis 4e gezeigten ersten Ventileinheiten 120 umfassen.

Figur 4a zeigt eine erste Ausführungsform der ersten Ventileinheit 120. Die erste Ventileinheit 120, insbesondere das erste Druckregelventil, ist als ein elektrisch geregeltes vorgesteuertes erstes Druckregelventil 140 ausgebildet. Das elektrisch geregelte vorgesteuerte erste Druckregelventil 140, ist als ein federbelastetes und mit Druck betätigbares 2/2-Wegeventil ausgebildet. Ausserdem umfasst die erste Ventileinheit 120 ein erstes Pilotventil 142, das als ein elektrisch betätigbares 3/2-Wegeventil ausgebildet ist. Die Ladepumpe 114, und/oder insbesondere der Ladehydraulikzweig 112, ist, insbesondere über eine Leitung, mit einem Einlass des ersten Druckregelventils 140 verbunden. Dadurch ist die Ladepumpe 114, und/oder insbesondere der Ladehydraulikzweig 112, mit dem ersten Druckregelventil 140 strömungsverbunden. Der Getriebeschmierhydraulikzweig 106 ist, insbesondere über eine weitere Leitung, mit einem Auslass des ersten Druckregelventils 140 verbunden. Dadurch ist der Getriebeschmierhydraulikzweig 106 mit dem ersten Druckregelventil 140 strömungsverbunden. Eine weitere Leitung verbindet den ersten Einlass des ersten Pilotventils 142 mit der Ladepumpe 114, und/oder insbesondere mit dem Ladehydraulikzweig 112. Dadurch ist die Ladepumpe 114 mit dem ersten Pilotventil 142 strömungsverbunden. Ein zweiter Einlass des ersten Pilotventils 142 kann mit einem Hydrauliktank verbunden, insbesondere strömungsverbunden sein. Ein erste Steuerleitung 150 verbindet den Auslass des ersten Pilotventils 142 mit dem ersten Druckregelventil 140. Dadurch ist das erste Druckregelventil 140 mit dem ersten Pilotventil 142 strömungsverbunden. Darüber hinaus kann die erste Ventileinheit 120, wie gezeigt, einen Drucksensor 152 umfassen. Der Drucksensor kann zur Druckregelung verwendet werden und/oder dient der Überprüfung der Ventilfunktion der ersten Ventileinheit 120, insbesondere des ersten Druckregelventils 140 und/oder des ersten Pilotventils 142. In der ersten Steuerleitung 150 kann eine Drossel bzw. ein Drosselventil angeordnet sein. Ebenso kann das erste Pilotventil 142 elektrisch betätigbar sein. Das erste Druckregelventil 140 kann mit dem ersten Pilotventil 142 mit Druck betätigbar sein.

Figur 4b zeigt eine weitere Ausführungsform der ersten Ventileinheit 120. Die in Figur 4b gezeigte Anordnung mit der weiteren Ausführungsform der ersten Ventileinheit entspricht im Wesentlichen der in den Figuren 1 bis 3 und 4a gezeigten hydraulischen Anordnung 20, weshalb im Folgenden lediglich auf die nicht gezeigte Details und/oder Unterschiede eingegangen wird. Die erste Ventileinheit 120 umfasst nur ein mechanisches erstes Druckregelventil 144, das insbesondere als ein federbelastetes und mit Druck betätigbares 2/2-Wegeventil ausgebildet ist. Eine Leitung verbindet die Ladepumpe 114, und/oder insbesondere den Ladehydraulikzweig 112, mit einem Einlass des mechanischen ersten Druckregelventils 144. Dadurch ist die Ladepumpe 114, und/oder insbesondere der Ladehydraulikzweig 112, mit dem mechanischen ersten Druckregelventil 144 strömungsverbunden. Eine weitere Leitung verbindet einen Auslass des mechanischen ersten Druckregelventils 144 mit dem Getriebeschmierhydraulikzweig 106. Dadurch ist der Getriebeschmierhydraulikzweig 106 mit dem mechanischen ersten Druckregelventil 144 strömungsverbunden.

Figuren 4c und 4d zeigen weitere Ausführungsformen der ersten Ventileinheit 120. Die in den Figuren 4c und 4d gezeigte Anordnung mit den weiteren Ausführungsformen der ersten Ventileinheit 120 entsprechen im Wesentlichen den in den Figuren 1 bis 3 und 4a und 4b gezeigten hydraulischen Anordnungen 20, weshalb im Folgenden lediglich auf die nicht gezeigte Details und/oder Unterschiede eingegangen wird. Figur 4c zeigt die erste Ventileinheit 120, die nur ein Rückschlagventil 146 umfasst. Figur 4d zeigt die erste Ventileinheit 120, die nur ein federbelastetes Rückschlagventil 148 umfasst. In beiden in den Figuren 4c und 4d gezeigte Ausführungsbeispielen verbindet eine Leitung die Ladepumpe 114, und/oder insbesondere den Ladehydraulikzweig 112, mit einem Einlass des Rückschlagventils 146 bzw. des federbelasteten Rückschlagventils 148. Dadurch ist die Ladepumpe 114, und/oder insbesondere der Ladehydraulikzweig 112, mit dem Rückschlagventil 146 bzw. dem federbelasteten Rückschlagventil 148 strömungsverbunden. Eine weitere Leitung verbindet einen Auslass des Rückschlagventils 146 bzw. des federbelasteten Rückschlagventils 148 mit dem Getriebeschmierhydraulikzweig 106. Dadurch ist der Getriebeschmierhydraulikzweig 106 mit dem Rückschlagventil 146 bzw. dem federbelasteten Rückschlagventil 148 strömungsverbunden.

Figur 4e zeigt eine weitere Ausführungsform der ersten Ventileinheit 120. Die in Figur 4e gezeigte Anordnung mit der weiteren Ausführungsform der ersten Ventileinheit entspricht im Wesentlichen der in den Figuren 1 bis 3 und 4a bis 4d gezeigten hydraulischen Anordnung 20, weshalb im Folgenden lediglich auf die nicht gezeigte Details und/oder Unterschiede eingegangen wird. Die erste Ventileinheit 120 umfasst ein direkt elektrisch angesteuertes erstes Druckregelventil 154, das als ein federbelastetes und elektrisch angesteuertes 2/2-Wegeventil ausgebildet ist. Die Ladepumpe 114, und/oder insbesondere der Ladehydraulikzweig 112, ist, insbesondere über eine Leitung, mit einem Einlass des direkt elektrisch angesteuerten ersten Druckregelventils 154 verbunden. Dadurch ist die Ladepumpe 114, und/oder insbesondere der Ladehydraulikzweig 112, mit dem ersten Druckregelventil 154 strömungsverbunden. Der Getriebeschmierhydraulikzweig 106 ist, insbesondere über eine weitere Leitung, mit einem Auslass des ersten Druckregelventils 154 verbunden. Dadurch ist der Getriebeschmierhydraulikzweig 106 mit dem ersten Druckregelventil 154 strömungsverbunden. Darüber hinaus umfasst die erste Ventileinheit 120 den Drucksensor 152 zur Druckregelung ersten Ventileinheit 120, insbesondere des ersten Druckregelventils 154.

## Patentansprüche

1. Hydraulische Anordnung für ein landwirtschaftliches oder industrielles Nutzfahrzeug (10), umfassend:
einen Haupthydraulikzweig (100) und eine Haupthydraulikpumpe (102), wobei dem Haupthydraulikzweig (100) mit der Haupthydraulikpumpe (102) Hydraulikflüssigkeit zuführbar ist,
und eine Ladepumpe (114), wobei der Haupthydraulikpumpe (102) mit der Ladepumpe (114) Hydraulikflüssigkeit zuführbar ist,
und einem Schmierhydraulikzweig (104) und einem Getriebeschmierhydraulikzweig (106), wobei dem Schmierhydraulikzweig (104) wenigstens eine Teilmenge der von der Ladepumpe (114) geförderten Hydraulikflüssigkeit zuführbar ist,
und einem Schalthydraulikzweig (108) zur Schaltung eines Getriebes,
und einer Getriebepumpe (110), wobei dem Schalthydraulikzweig (108) mit der Getriebepumpe (110) Hydraulikflüssigkeit zuführbar ist, und dem Getriebeschmierhydraulikzweig (106) wenigstens eine Teilmenge der von der Ladepumpe (114) geförderten Hydraulikflüssigkeit zuführbar ist, wobei die hydraulische Anordnung (20) eine erste Ventileinheit (120) umfasst, die einen mit der Ladepumpe (114) verbundenen Einlass und einen mit dem Getriebeschmierhydraulikzweig (106) verbundenen Auslass aufweist, wobei die erste Ventileinheit (120) zur Steuerung der Verbindung zwischen der Ladepumpe (114) und dem Getriebeschmierhydraulikzweig (106) betätigbar ist,
**dadurch gekennzeichnet, dass** die hydraulische Anordnung (20) eine zweite Ventileinheit (122) umfasst, und die zweite Ventileinheit (122) einen Einlass aufweist, der mit der Getriebepumpe (110) verbunden ist, und einen Auslass aufweist, der mit dem Getriebeschmierhydraulikzweig (106) verbunden ist, wobei die zweite Ventileinheit (122) zur Steuerung der Verbindung zwischen der Getriebepumpe (110) und dem Getriebeschmierhydraulikzweig (106) betätigbar ist.

2. Hydraulische Anordnung nach Anspruch 1, **dadurch gekennzeichnet, dass** die erste Ventileinheit (120) ein erstes Druckregelventil (140, 144, 154) und insbesondere ein erstes Pilotventil (142) umfasst.

3. Hydraulische Anordnung nach einem der Ansprüche 1 bis 2, **dadurch gekennzeichnet, dass** dem Schalthydraulikzweig (108) wenigstens eine Teilmenge der von der Haupthydraulikpumpe (102) geförderten Hydraulikflüssigkeit zuführbar ist.

4. Hydraulische Anordnung nach mindestens einem der vorhergehenden Ansprüche, **dadurch gekennzeichnet, dass** der Getriebeschmierhydraulikzweig (106) eine Schmierung eines Getriebes und/oder von Getriebekomponenten mit Hydraulikflüssigkeit umfasst.

5. Hydraulische Anordnung nach mindestens einem der vorhergehenden Ansprüche, **dadurch gekennzeichnet, dass** der Schmierhydraulikzweig (104) eine Schmierung einer Antriebsachse des Nutzfahrzeugs, und/oder von Fahrzeugachskomponenten und/oder einer Zapfwelle und/oder von Zapfwellenkomponenten und/oder eines Differentials mit Hydraulikflüssigkeit umfasst.

6. Hydraulische Anordnung nach mindestens einem der vorhergehenden Ansprüche, **dadurch gekennzeichnet, dass** der Haupthydraulikzweig (100) eine Versorgung von Steuerventilen mit Hydraulikflüssigkeit umfasst und/oder der Haupthydraulikzweig (100) eine Versorgung einer hydraulischen Anhängevorrichtung (30) mit Hydraulikflüssigkeit umfasst und/oder der Haupthydraulikzweig (100) eine Versorgung einer Achsfederung für eine Antriebsachse (14, 16) des Nutzfahrzeugs (10) mit Hydraulikflüssigkeit umfasst und/oder der Haupthydraulikzweig (100) eine Versorgung einer Kabinenfederung für eine Kabine (12) des Nutzfahrzeugs (10) mit Hydraulikflüssigkeit umfasst und/oder der Haupthydraulikzweig (100) eine Versorgung einer Bremsanlage für Bremsen am Nutzfahrzeug (10) mit Hydraulikflüssigkeit umfasst und/oder der Haupthydraulikzweig (100) eine Versorgung einer Lenkanlage für eine Lenkung des Nutzfahrzeugs (10) mit Hydraulikflüssigkeit umfasst.

7. Landwirtschaftliches oder industrielles Nutzfahrzeug, insbesondere ein Traktor oder Schlepper, umfassend eine hydraulische Anordnung (20) nach mindestens einem der Ansprüche 1 bis 6.

## Claims

1. Hydraulic arrangement for an agricultural or industrial utility vehicle (10), comprising:
a main hydraulic branch (100) and a main hydraulic pump (102), wherein hydraulic fluid is able to be fed to the main hydraulic branch (100) by the main hydraulic pump (102),
and a charge pump (114), wherein hydraulic fluid is able to be fed to the main hydraulic pump (102) by the charge pump (114),
and a lubricating hydraulic branch (104) and a gearbox lubricating hydraulic branch (106), wherein at least a part of the hydraulic fluid delivered by the charge pump (114) is able to be fed to the lubricating hydraulic branch (104),
and a shifting hydraulic branch (108) for shifting a gearbox,
and a gearbox pump (110), wherein hydraulic fluid is able to be fed to the shifting hydraulic branch (108) by the gearbox pump (110), and at least a part of the hydraulic fluid delivered by the charge pump (114) is able to be fed to the gearbox lubricating hydraulic branch (106), wherein the hydraulic arrangement (20) comprises a first valve unit (120) which has an inlet connected to the charge pump (114) and an outlet connected to the gearbox lubricating hydraulic branch (106), wherein the first valve unit (120) is actuable to control the connection between the charge pump (114) and the gearbox lubricating hydraulic branch (106),
**characterized in that** the hydraulic arrangement (20) comprises a second valve unit (122), and the second valve unit (122) has an inlet connected to the gearbox pump (110) and an outlet connected to the gearbox lubricating hydraulic branch (106), wherein the second valve unit (122) is actuable to control the connection between the gearbox pump (110) and the gearbox lubricating hydraulic branch (106).

2. Hydraulic arrangement according to Claim 1, **characterized in that** the first valve unit (120) comprises a first pressure regulating valve (140, 144, 154) and in particular a first pilot valve (142).

3. Hydraulic arrangement according to either of Claims 1 and 2, **characterized in that** at least a part of the hydraulic fluid delivered by the main hydraulic pump (102) is able to be fed to the shifting hydraulic branch (108).

4. Hydraulic arrangement according to at least one of the preceding claims, **characterized in that** the gearbox lubricating hydraulic branch (106) encompasses lubrication of a gearbox and/or of gearbox components with hydraulic fluid.

5. Hydraulic arrangement according to at least one of the preceding claims, **characterized in that** the lubricating hydraulic branch (104) encompasses lubrication of a drive axle of the utility vehicle and/or of vehicle axle components and/or of a PTO shaft and/or of PTO shaft components and/or of a differential with hydraulic fluid.

6. Hydraulic arrangement according to at least one of the preceding claims, **characterized in that** the main hydraulic branch (100) encompasses supplying control valves with hydraulic fluid and/or the main hydraulic branch (100) encompasses supplying a hydraulic hitch (30) with hydraulic fluid and/or the main hydraulic branch (100) encompasses supplying an axle suspension for a drive axle (14, 16) of the utility vehicle (10) with hydraulic fluid and/or the main hydraulic branch (100) encompasses supplying a cab suspension for a cab (12) of the utility vehicle (10) with hydraulic fluid and/or the main hydraulic branch (100) encompasses supplying a brake system for brakes on the utility vehicle (10) with hydraulic fluid and/or the main hydraulic branch (100) encompasses supplying a steering system for steering the utility vehicle (10) with hydraulic fluid.

7. Agricultural or industrial utility vehicle, in particular a tractor, comprising a hydraulic arrangement (20) according to at least one of Claims 1 to 6.

## Revendications

1. Agencement hydraulique pour véhicule utilitaire agricole ou industriel (10), comportant :
une branche hydraulique principale (100) et une pompe hydraulique principale (102), la branche hydraulique principale (100) pouvant être alimentée en fluide hydraulique par la pompe hydraulique principale (102),
et une pompe de charge (114), la pompe hydraulique principale (102) pouvant être alimentée en fluide hydraulique par la pompe de charge (114),
et une branche hydraulique de lubrification (104) et une branche hydraulique de lubrification de transmission (106), au moins une partie du fluide hydraulique refoulé par la pompe de charge (114) pouvant être acheminée vers la branche hydraulique de lubrification (104),
et une branche hydraulique de commande (108) destinée à commander une transmission,
et une pompe de transmission (110), la branche hydraulique de commande (108) pouvant être alimentée en fluide hydraulique par la pompe de transmission (110) et au moins une partie du fluide hydraulique refoulé par la pompe de charge (114) pouvant être acheminée vers la branche hydraulique de lubrification de transmission (106), l'agencement hydraulique (20) comprenant une première unité de soupape (120) qui présente une entrée reliée à la pompe de charge (114) et une sortie reliée à la branche hydraulique de lubrification de transmission (106), la première unité de soupape (120) pouvant être actionnée pour commander la liaison entre la pompe de charge (114) et la branche hydraulique de lubrification de transmission (106),
**caractérisé en ce que** l'agencement hydraulique (20) comprend une deuxième unité de soupape (122), et la deuxième unité de soupape (122) comporte une entrée reliée à la pompe de transmission (110) et une sortie reliée à la branche hydraulique de lubrification de transmission (106), la deuxième unité de soupape (122) pouvant être actionnée pour commander la liaison entre la pompe de transmission (110) et la branche hydraulique de lubrification de transmission (106).

2. Agencement hydraulique selon la revendication 1, **caractérisé en ce que** la première unité de soupape (120) comprend une première soupape de régulation de pression (140, 144, 154) et, en particulier, une première soupape pilote (142).

3. Agencement hydraulique selon l'une des revendications 1 à 2, **caractérisé en ce qu'**au moins une partie du fluide hydraulique refoulé par la pompe hydraulique principale (102) peut être acheminée vers la branche hydraulique de commande (108).

4. Agencement hydraulique selon au moins l'une des revendications précédentes, **caractérisé en ce que** la branche hydraulique de lubrification de transmission (106) comprend une lubrification d'une transmission et/ou de composants de transmission à l'aide d'un fluide hydraulique.

5. Agencement hydraulique selon au moins l'une des revendications précédentes, **caractérisé en ce que** le circuit hydraulique de lubrification (104) comprend la lubrification, au moyen de fluide hydraulique, d'un essieu moteur du véhicule utilitaire et/ou de composants d'essieu de véhicule et/ou d'une prise de force et/ou de composants de prise de force et/ou d'un différentiel.

6. Agencement hydraulique selon au moins l'une des revendications précédentes, **caractérisé en ce que** la branche hydraulique principale (100) comprend une alimentation en fluide hydraulique de soupapes de commande et/ou la branche hydraulique principale (100) comprend une alimentation en fluide hydraulique d'un dispositif d'attelage hydraulique (30) et/ou la branche hydraulique principale (100) comprend une alimentation en fluide hydraulique d'une suspension d'essieu pour un essieu moteur (14, 16) du véhicule utilitaire (10) et/ou la branche hydraulique principale (100) comprend une alimentation en fluide hydraulique d'une suspension de cabine pour une cabine (12) du véhicule utilitaire (10) et/ou la branche hydraulique principale (100) comprend une alimentation en fluide hydraulique d'un système de freinage pour des freins du véhicule utilitaire (10) et/ou la branche hydraulique principale (100) comprend une alimentation en fluide hydraulique d'un système de direction pour une direction du véhicule utilitaire (10).

7. Véhicule utilitaire agricole ou industriel, en particulier tracteur, comprenant un agencement hydraulique (20) selon au moins l'une des revendications 1 à 6.
